# EUROPEAN PATENT APPLICATION

(11) **EP 2 608 345 A1**
(43) Date of publication of application: **26.06.2013**
(21) Application number: 11010183.9
(22) Date of filing: 23.12.2011
(51) Int. Cl.: H02H 7/22, H02H 9/00

(54) **Low-, medium-, or high-voltage switchgear**

(71) Applicant: ABB Technology AG, 8050 Zürich (CH)
(72) Inventor: Gentsch, Dietmar, Dr.-Ing., 40882 Ratingen (DE)
(74) Representative: Schmidt, Karl Michael

(57) **Abstract**

The invention relates to a low-, medium-, or high-voltage voltage switchgear with circuit breaker or circuit breakers which switches electrical equipment, according to the preamble of claim 1.

In order to protect the switchgear, especially the cirucuit breakers in the switchgear against the so called spot welding under vacuum atmosphere, especially during the closing operation the invention propose, that in case of the use of the switchgear for switching capacitive or inductive equipment or inductive or capacitive current network an inrush current limiter is electrically in line or in series with the current path of the circuit breaker.

## Description

The invention relates to a low-, medium-, or high-voltage switchgear according to the preamble of claim 1.

The actual situation is to use the vacuum circuit breaker equiped with mainly one single vacuum interrupter to operate the close and open operation. In this specific case the inrush current of 5kA at nearly 400Hz or 20kA at nearly 4300Hz in case of back to back switching has an influence during closing of the contacts at rated voltage. At first before the contacts are closed it develops an pre-arc short before both conatcts tuoch each other and during the closing stage it came to a so called "spot welding" with pre-arcing under vacuum atmosphere. During the a number of opening operations the contacts will be damaged more and more and material is transferd between the contacts and microtips are developed which decreases the voltage strength especially in the gap between the contacts.

According to this, it is the object of the invention to protect the switchgear, especially the cirucuit breakers in the switchgear against the so called "spot welding" under high inrush current load with pre-arcing, especially during the closing operation.

This problem is solved by the basical feature of the invention, that in case of the use of the switchgear for switching capacitive or inductive equipment or inductive or capacitive current network an inrush current limiter is electrically in line or in series with the current path of the circuit breaker. By this, the current is automatically limited during switching (closing operation) process, in order to prevent the contacts before strong spot welding in a very effective way.

The idea is to reduce the "spot welding strength" during the closing operation by applying an inrush current limiting system. The inrush current limiter absorbs high amounts of inrush current when electrical equipment is turned on by offering a high resistance to current and quickly decreasing in resistance once steady state current begins to flow throught the thermistor. During the absorption of energy, the initial high resistance of the thermistor drops within millisecounds to a negligible resistance.

So the "spot welding" under vacuum can be reduced to a certain limit which provides low "damage or contact material transfer with the related occurrence of microtips" at the contact surface.

In a further embodiment the inrush current limiter is connected in line between the circuit breaker (here especially with the vacuum interrupter) and the capacitive or inductive equipement which will be switched on or off. This is most effective.

Furthermore is porposed, that the inrush current limiter is a semiconductor element, which itselfs increase its electrical resistance during current increase.

Furthermore an advantageous embodiment is proposed by that the increase current limiter is arranged each for each electrical phase. So by that is given a single phase and a three phase application.

Most practical and advantageous for compact and safe integration is, that the current limiter or the current limiters are integrated into the switchgear, or a housing of the switchgear.

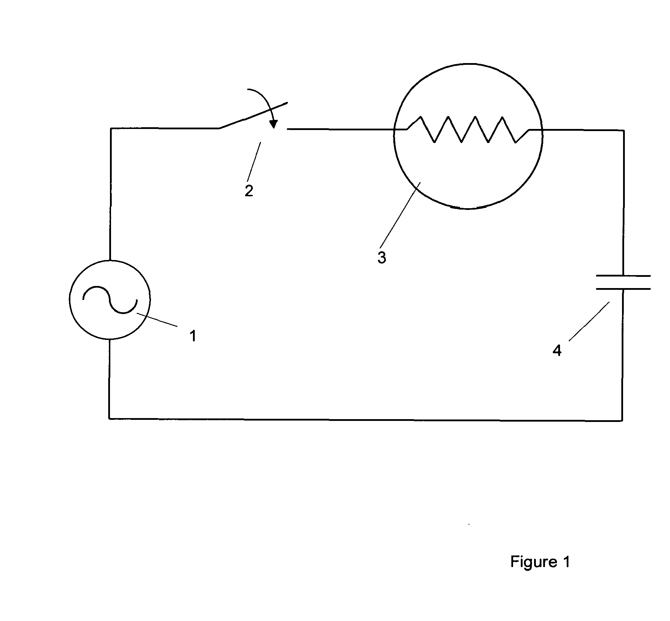

Figure 1 shows a circuit diagram of the location of the circuit limiter. It is shown, that the inrush current limiter 3 is connected in series to the current path of the circuit contacts 2, and arranged on the side between the circuit breaker and the electrical equipment 4, which has a capacitive or inductive property.

The idea is to reduce the "spot welding" during the closing operation by applying an inrush current limiting system. The inrush current limiter absorbs high amounts of inrush current when electrical equipment is turned on by offering a high resistance to current and quickly decreasing in resistance once steady state current begins to flow throught the thermistor. During the absorption of energy, the initial high resistance of the thermistor drops within millisecounds to a negligible resistance.

## Claims

1. Low-, medium-, or high-voltage switchgear with circuit breaker or circuit breakers which switches electrical equipment,
**characterized in that** in case of the use of the switchgear for switching capacitive or inductive equipment or inductive or capacitive current network an inrush current limiter is electrically in line or in series with the current path of the circuit breaker.

2. Low-, medium-, or high-voltage switchgear according to claim 1, **characterized in that** the inrush current limiter is connected in line between the circuit breaker and the capacitive or inductive equipement which will be switched on or off.

3. Low-, medium-, or high-voltage switchgear according to one of the aforesaid claims,
**characterized in that** the inrush current limiter is a semiconductor element, which itselfs increase its electrical resistance during current increase.

4. Low-, medium-, or high-voltage switchgear according to one of the aforesaid claims,
**characterized in that** the increase current limiter is arranged each for each electrical phase.

5. Low-, medium-, or high-voltage switchgear according to one of the aforesaid claims,
**characterized in that** the current limiter is based on a semiconductor current limiter.

6. Low-, medium-, or high-voltage switchgear according to one of the aforesaid claims,
**characterized in that** the current limiter or the current limiters are integrated into the switchgear, or a housing of the switchgear.
